# EUROPEAN PATENT APPLICATION

(11) **EP 4 786 767 A1**
(43) Date of publication of application: **05.08.2026**
(21) Application number: 26155671.6
(22) Date of filing: 02.02.2026
(51) Int. Cl.: F02B 39/00, F02C 6/12, F04D 29/16, F04D 29/28

(54) **TURBOCHARGER FOR ROAD VEHICLES**

(30) Priority: 04.02.2025 IT 202500002031
(71) Applicant: FERRARI S.p.A., 41100 Modena (IT)
(72) Inventor: MATTIELLO, Daniele, 41100 MODENA (IT); HOFFER, Pierre Alain, 41100 MODENA (IT)
(74) Representative: Studio Torta S.p.A.

(57) **Abstract**

A turbocharger for road vehicles has a turbine (2) provided with a first impeller (6) engaged in a first containing casing (3) in a rotary manner, a compressor (7) provided with a second impeller (11) engaged in a second containing casing (8) in a rotary manner, and a transmission shaft (12) coupled to the impellers (6, 11) of the turbine (2) and the compressor (7) in an angularly fixed manner and engaged in a rotary manner through at least one support bearing (13, 14); the impeller (11) of the compressor (7) being axially limited by an end face (16) facing the second containing casing (8) and provided with at least one tooth (17, 19) configured to generate a pressure drop in an air flow fed between the impeller (11) and the containing casing (8) of the compressor (7).

## Description

### CROSS-REFERENCE TO RELATED APPLICATIONS

This patent application claims priority from Italian patent application no. 102025000002031 filed on February 4, 2025, the entire disclosure of which is incorporated herein by reference.

### TECHNICAL FIELD

This invention relates to a turbocharger for road vehicles.

### BACKGROUND

In particular, this invention relates to a turbocharger comprising a turbine with a first containing casing, which has at least one inlet channel and one exhaust channel, and is engaged by a first impeller in a rotary manner.

The inlet channel is connected with at least one cylinder of an internal combustion engine via a supply duct configured to feed the inlet channel with combustion gases produced in that cylinder.

The turbocharger also comprises a compressor provided with a second containing casing, which has an intake duct for combustion air at ambient pressure and, in addition, a delivery duct for sending pressurised combustion air to the cylinders of the internal combustion engine, and is engaged by a second impeller in a rotary manner.

The turbocharger also has a transmission shaft coupled in an angularly fixed manner to the turbine and compressor impellers and engaged in a rotary manner through at least one support bearing, normally two support bearings, mounted between the turbine and compressor impellers.

Known turbochargers for road vehicles of the type described above have a number of drawbacks, mainly resulting from the fact that the pressurised combustion air fed along the compressor delivery duct and between the compressor impeller and containing casing generates a relatively high axial thrust force on the support bearing, due to the pressure balance between the compressor and the turbine, which results in a relatively short service life of that support bearing.

### SUMMARY

The object of this invention is to provide a turbocharger for road vehicles overcoming the drawbacks described above and that is simple and inexpensive to produce.

According to this invention, a turbocharger for road vehicles is provided as set forth in the appended claims

### BRIEF DESCRIPTION OF THE DRAWINGS

This invention will now be described with reference to the accompanying drawings, which illustrate a non-limiting embodiment thereof, wherein:
Figure 1 is a schematic longitudinal cross section, with parts removed for clarity, of a preferred embodiment of the turbocharger of this invention;
Figure 2 is a schematic perspective view, with parts removed for clarity, of a detail of the turbocharger in Figure 1;
Figure 3 is a schematic side view, with parts removed for clarity, of a variant of the turbocharger in Figure 1; and
Figure 4 is a schematic perspective view, with parts removed for clarity, of a detail of the turbocharger in Figure 3.

### DESCRIPTION OF EMBODIMENTS

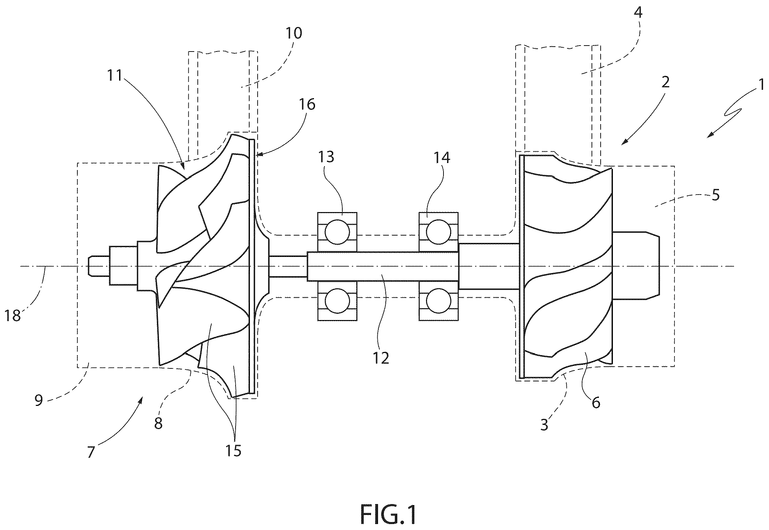

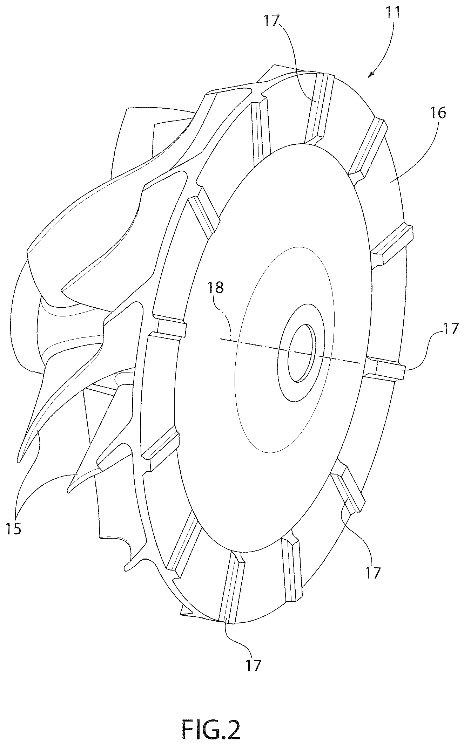

With reference to Figures 1 and 2, reference number 1 denotes, as a whole, a turbocharger for road vehicles comprising a turbine 2 provided with a containing casing 3, which has at least one inlet channel 4 and one exhaust channel 5, and is engaged by an impeller 6 in a rotary manner.

The inlet channel 4 is connected with at least one cylinder (not shown) of an internal combustion engine (not shown) via a supply duct (not shown) configured to feed the inlet channel 4 with combustion gases produced in that cylinder (not shown).

The turbocharger 1 also comprises a compressor 7 provided with a containing casing 8, which has an intake duct 9 for combustion air at ambient pressure and, in addition, a delivery duct 10 for sending pressurised combustion air to the cylinders (not shown) of the internal combustion engine (not shown), and is engaged by an impeller 11 in a rotary manner.

The turbocharger 1 is also provided with a transmission shaft 12, which is coupled in an angularly fixed manner to the impellers 6, 11 of the turbine 2 and the compressor 7, and is engaged in a rotary manner via two support bearings 13, 14 mounted between the impellers 6, 11, of which the first bearing 13 is arranged between the impeller 11 and the second bearing 14.

The impeller 11 is provided with multiple blades 15, and is axially limited by an end face 16 opposite those blades 15.

The face 16 is turned towards the casing 8 and extends at a given distance from that casing 8.

The face 16 has multiple teeth 17, which are uniformly distributed around a rotation axis 18 of the shaft 12 and the impeller 11, and are oriented radially with respect to the axis 18.

In this case, the teeth 17 extend along part of the face 16 from a perimeter edge of the impeller 11.

The presence of the teeth 17 generates a pressure drop in the pressurised air flow fed between the end face 16 and the casing 8 and, as a result, generates a relatively low axial thrust force on the support bearings 13, 14 due to the pressure balance between the compressor 7 and the turbine 2, which guarantees that those support bearings 13, 14 will have a relatively long service life.

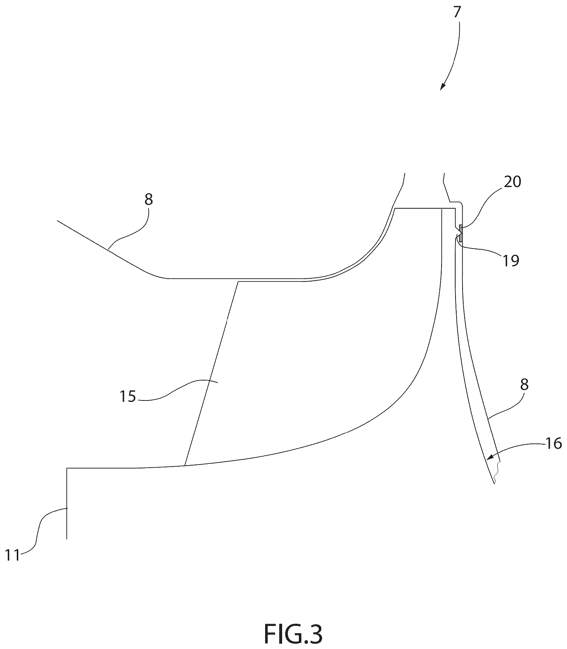

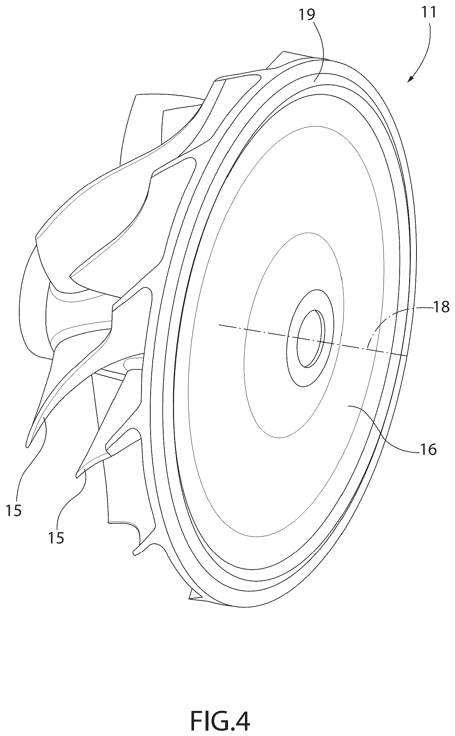

The variant shown in Figures 3 and 4 differs from the one shown in Figures 1 and 2 solely in that, in it, the teeth 17 are eliminated and replaced with at least one tooth 19, which is obtained on the face 16, extends around the axis 18, and, in this case, is closed in a ring around the axis 18.

The tooth 19 cooperates with an annular coating layer 20, which is applied to the casing 8 coaxially to the axis 18, is made of abradable material, and is abraded by the tooth 19 during the rotation of the impeller 11 around the axis 18 so as to:
define a sealing zone between the casing 8 and the impeller 11;
vary the pressure balance between the compressor 7 and the turbine 2; and
generate a relatively low axial thrust force on the bearings 13, 14.

According to a variant not shown, the face 16 has at least two teeth 19 coaxial with each other and with the axis 18.

The turbocharger 1 has certain advantages mainly resulting from the fact that the teeth 17, 19 generate a pressure drop in the pressurised air flow between the end face 16 and the casing 8, generating a relatively low axial thrust force on the support bearings 13, 14, which guarantees that those support bearings 13, 14 will have a relatively long service life.

## Claims

1. A turbocharger for road vehicles comprising a turbine (2) comprising, in turn, a first containing casing (3) and a first impeller (6) engaged in the first containing casing (3) in a rotary manner; a compressor (7) comprising, in turn, a second containing casing (8) and a second impeller (11) engaged in the second containing casing (8) in a rotary manner; a transmission shaft (12) coupled to said first and second impellers (6, 11) in an angularly fixed manner; and at least one support bearing (13, 14) mounted between said first and second impellers (6, 11) and engaged by the transmission shaft (12) in a rotary manner; the second impeller (11) being provided with a plurality of blades (15) and being axially delimited by an end face (16) facing the support bearing (13, 14) and the turbine (2); and **characterized by** the second impeller (11) being provided with at least one tooth (17, 19), which protrudes from the end face (16) so as to generate a pressure drop in an air flow fed between the end face (16) and the second containing casing (8).

2. The turbocharger according to claim 1, wherein the second impeller (11) is provided with a plurality of teeth (17, 19), which are distributed, in particular evenly distributed, around a rotation axis (18) of the second impeller (11) and protrude from the end face (16) so as to generate a pressure drop in the air flow fed between the end face (16) and the second containment casing (8).

3. The turbocharger according to claim 1 or 2, wherein each tooth (17) is radially oriented relative to a rotation axis (18) of the second impeller (11).

4. The turbocharger according to claim 1, wherein each tooth (19) extends around a rotation axis (18) of the second impeller (11).

5. The turbocharger according to claim 4, wherein each tooth (19) has an annular shape looped around the rotation axis (18) of the second impeller (11).

6. The turbocharger according to claim 4 or 5, wherein the second containing casing (8) is provided with a coating layer (20) of abradable material, which cooperates with each tooth (19) of the second impeller (11) so as to be coupled to the tooth (19) in a fluid-tight manner following the rotation of the second impeller (11) around said rotation axis (18).

7. The turbocharger according to any one of the preceding claims, wherein each tooth (17, 19) axially protrudes from the end face (16).
